# EUROPEAN PATENT SPECIFICATION

(11) **EP 3 798 502 B1**
(45) Date of publication and mention of the grant of the patent: **08.09.2021**
(21) Application number: 19200506.4
(22) Date of filing: 30.09.2019
(51) Int. Cl.: F21S 2/00, F21V 23/04, F21V 17/00, F21V 8/00, F21Y 115/10, F21Y 103/10

(54) **PANEL LIGHT AND KIT COMPRISING SAID PANEL LIGHT**
PLATTENLEUCHTE UND KIT MIT DER PLATTENLEUCHTE
ÉCLAIRAGE DE PANNEAU ET KIT COMPRENANT LEDIT ÉCLAIRAGE DE PANNEAU

(43) Date of publication of application: 31.03.2021
(73) Proprietor: Thorn Lighting Limited, Spennymoor, Durham DL16 6HL (GB); Zumtobel Lighting GmbH, 6850 Dornbirn (AT)
(72) Inventor: Archer, Peter, Newton Aycliffe, Durham DL5 4XE (GB); Bowness, Anton, Shiremoor, Newcastle Upon Tyne (GB); Maughan, Steve, Spennymoor, Durham DL16 7HL (GB); Pilkington, Gary, Browney, Durham (GB); Stockley, Paul, Heighington, Durham DL56RL (GB); Geppert, Jakob, 6971 Hard (AT)
(74) Representative: Kiwit, Benedikt

(56) References cited:
- EP-A1- 2 644 975
- EP-A1- 2 824 381
- EP-A1- 3 135 995
- WO-A1-2016/142643
- KR-A- 20170 140 589
- US-A1- 2015 219 825
- US-A1- 2019 162 894

## Description

The present invention refers to a panel light comprising an optical element panel substantially extending in a plane, a light source and electronic module to run the light source.

Such type of usually flat and planar luminaires are generally known in the prior art. Panel lights usually use an LED edge-lid light guide as part of the optical element panel to allow for a homogenous light output to a front side of the luminaire. Recently, the combination of functional components like any kind of sensors, e.g. for presence detection or illumination detection, are more frequently used to optimize lighting. Furthermore, manual or automatic control of the luminaire, e.g. via wireless communication, is more and more required by the customers. There is also a need to provide a panel light with other functions, like a status indicator or emergency lighting, to fulfil regulatory requirements.

To apply any such functional components to the known flat luminaires (i.e. panel lights) usually requires the provision of individual attaching means, like clamps or the luminaire itself needed to be changed to allow attachment of these additional components. The known panel lights thus need to be adapted individually to provide an additional function like the ones mentioned herein above for a particular lighting concept. The additional attachment may also adversely affect the luminaire's appearance.

It is thus an object of the present invention to provide such a panel light with additional means, which allow for an easy attachment and preferably replacement of functional components. Documents KR 2017 0140589 A, US 2015/219825 A1, EP 2824381 A1 and US 2019/162894 A1 are considered as relevant prior art for the present invention.

The object is achieved by the subject-matter of the independent claim. The dependent claims study further the central idea of the present invention in a preferable manner.

According to a first aspect, the present invention refers to a panel light (in the following also referred to as "luminaire" or "flat luminaire") comprising an optical element panel substantially extending in a plane and having a front side, a rear side and a circumferential side edge extending between the front side and the rear side.

The panel light further comprises a light source to emit light via the optical element panel for light output of the panel light preferably at least via the front side. The panel light further comprises an electronic module (e.g. a driver preferably including electrical terminals for connection of external electrical cables) to run the light source. An opening penetrates the optical element panel to connect the front side and the rear side to form a through hole designed to receive at least part of a functional component. The opening can have any shape and is preferably round, circular, oval, polygonal, rectangular, square, or it can have any other shape in cross section or top view. Of course, the panel light may also comprise more than one opening, like two, three or even more openings. The opening is preferably symmetrically provided, i.e. in a centre of the panel light or the optical element panel and more preferred its front and/or rear side.

Such a flat luminaire now for the first time allows for a functional component to be easily attachable. This allows the customer to individually equip the panel light with a functional component according to the customers need, if and as required.

The panel light further comprises a luminaire housing for carrying the optical element panel and preferably the light source and/or the electronic module. The luminaire housing may also be used for mounting the panel light to a mounting area, like a wall or a ceiling of a room. The luminaire housing thus allows for an easy handling and mounting of the luminaire components as it carries the respective features.

The luminaire housing comprises a base portion covering the rear side of the optical element panel. The base portion preferably is a back panel and extends in a plane parallel to the plane in which the optical element panel or its front and rear side extend. The base portion is in flat contact with the rear side and extends over the whole rear side to thus completely cover and support the optical element panel at its rear side.

The luminaire housing preferably further comprises a frame portion circumferentially surrounding the optical element panel at its side edge to thus support and carry the optical element panel and to hold together the optical element panel if comprising a number of individual elements being stacked together to form the optical element panel, as further described herein below.

The base portion comprises a second opening being coaxially arranged with the opening of the optical element panel to form the through hole. By the openings being arranged coaxially, the through hole extends from the front side of the optical element panel to a rear side of the luminaire housing and thus fully penetrates these luminaire components. Hence, even when comprising a partially surrounding luminaire housing for carrying at least parts of the panel light, the functional component can still be provided within the opening from a rear side of the panel light and thus at a hidden side of the panel light when being in operation. The base portion and the frame portion can be separate elements so that the frame portion maybe provided with the other luminaire components, like the optical element panel and the light source and then closed from the rear side by the base portion to fix, position and preferably align the optical element panel and the light source which respect to each other and within the luminaire housing. This facilitates manufacturing of individual luminaire layouts.

The electronic module can be positioned at the rear side of the optical element panel or, if present, at a rear side of the base portion being opposite to the optical element panel, to connect the front side with the electronic module via the through hole, i.e. via the opening(s). As the through hole is thus directly connected to the electronic module, a functional component being at least partially received in the through hole or opening(s) can be easily functionally connected with the already present electronic module to thus allow for an easy connection of the functional component and electronic module.

The optical element panel may comprise a light guide panel and/or a luminaire cover and/or a diffusor (panel) and/or a lens (arrangement). The optical element panel can thus be provided according to the customer needs. The optical element panel may preferably further comprise a reflector positioned accordingly to reflect light into a desired direction. In a preferred embodiment, the reflector forms the rear side of the optical element panel to allow any light being reflected towards the front side for light output of the panel light. Also, a side of the base portion facing the optical element panel can be reflective, e.g. comprise a reflective coating, or the base portion being made of a reflective material.

The light output of the panel light preferably happens (at least) via the front side of the optical element panel, while, according to other embodiments, light output of the panel light can also happen to any other side of the optical element panel or to different sides of the luminaire. For instance, light output via the front side can be used as main lighting of the luminaire, while light output via the rear side can be used as secondary lighting (e.g. ambient light) towards a rear side of the luminaire.

The light source may comprise an LED module preferably comprising LEDs and/or OLEDs. The LED module preferably emits light into the side edge of the optical element panel and preferably a side edge of the light guide panel extending between the front side and the rears side; the optical element panel thus being edge-lit and having a most compact layout; e.g. with regard to the thickness of the luminaire.

The panel light and/or the optical element panel may have any shape, but they preferably have a polygonal or rectangular (e.g. 300mm x 1200mm) or square (600mm x 600mm) shape. They may also be round, circular or oval in shape. The rectangular layout is, however, preferred. The light source, preferably in the form of an LED module, is thus provided at least at one or preferably at two opposite sides of the optical element panel or its side edge which form a light input area. If the light source is only provided at one side of the optical element panel, there are preferably provided reflective means at a side of the optical element panel (e.g. at the or in the optical element panel or at the frame portion) opposite to the light input area with respect to the opening to reflect light input via the light input area towards a side of the opening opposite to the light input area to thus allow for a homogenous light distribution over the entire optical element panel.

The panel light may further comprise the already mentioned functional component being detachably mounted. The functional component at least comprises a functional section which is at least partially inserted into the through hole or opening(s) from the rear side towards the front side and preferably in a way to be substantially flush with the front side. It is thus possible to provide the panel light with any desired type of functional component. The component being detachably mounted allows for easy assembly and disassembly thereof. The functional component being substantially flush with the front side allows for a well aesthetical appearance of the panel light. According to the given needs and dependent on the type of functional component, the functional section may also protrude from the through hole or opening via the front side or be set back thereto.

The functional section may comprise one or a plurality of functional elements of the group consisting of a sensor, like a passive infrared sensor (PIR sensor) and/or a microwave sensor (MWS), a lighting unit, like an emergency light and/or a status indicator lamp, a wireless communication module, like a Bluetooth module and/or a WLAN module and/or an RFID module, and a blank cover. The functional sections mentioned herein above are only given as examples, while the application is not limited to any functional components. Hence, the panel light can be provided with any type of functional component being useful for the lighting according to the customer's needs. Sensors can be used to control the illumination (e.g. colour temperature, light intensity, etc.). Corresponding lighting units can be used to allow for indication or displaying of information. A wireless communication module can be used to externally control the luminaire and its lighting or updating any software of the luminaire or receiving any data, like operating data, of the luminaire.

The functional section may comprise an element housing for carrying the functional element. The element housing of different functional sections each may have the same layout and dimension, which allows for an easy replacement of different functional components. Also, the outer appearance of the luminaire remains the same while using different types of functional elements including a simple blank cover.

The functional component may further comprise a base section for detachably mounting the functional component preferably to the rear side or to the luminaire housing (preferably its base portion) or the electronic module. Via this base section, the functional component can be easily attached in a detachable manner, which improves and facilitates the interchangeability of the functional components. In a preferred embodiment, the base section may comprise at least parts of or all of electronic components to run the functional section. Hence, the functional component itself can be sufficiently equipped with the electronic components required for operating the functional element. The functional component can thus also be provided in a self-sustained manner if, for instance, comprising a battery.

The base section and the functional section can be detachably connected to each other, preferably via the element housing. In this regard, the base section may be provided with main electronic components required for all or most of the different functional components or sections or elements, which thus do not need to be replaced when the functional component is replaced. Hence, the functional element can be changed in a most resource-conserving manner. The functional element can preferably be detachably connected to the base section, e.g., by/via a carrier. This carrier may allow for an easy replacement of the functional element, preferably in case the carriers all have the same interface to the base section; e.g. a bayonet or screw connection.

The functional component, preferably at least its base section, may comprise a functional housing. This allows for the functional element and preferably also the electronic components to be securely housed and thus protected from outer influences and are also easier to handle. The functional housing may cooperate with a module housing of the electronic module to form an associated electronic housing when the functional component is mounted. Hence, these two housings can fit to each other in a way that they provide an overall protection for the electronics and a well outer appearance of the luminaire.

The functional component, preferably its functional section and/or its base section, on the one side and the electronic module on the other side may comprise corresponding electrical and/or mechanical connectors. This allows for an easy connection of these two components. The mechanical connection allows for an easy mechanical attachment of the function component in a detachable manner. The electric connectors allow for an easy electrical connection to thus easily attach the functional component to the electronic module of the luminaire, so that, for instance the electronic components of the functional component can be limited to the specific functional elements required for this type of functional element, while the rest of the electronic needed to run the functional components can be integrated in the electronic module, so that the functional component itself can be further simplified.

The functional component, preferably its functional section and/or its base section, on the one side and the electronic module on the other side, preferably their connectors, may comprise poka-yoke structures for fail-save assembly. For instance, the functional housing can have an asymmetric layout and a corresponding receiving section of the electronic module, e.g. its module housing, is correspondingly designed to only allow for attachment in a unique orientation of these two features.

According to another aspect, the present invention also refers to a kit comprising a panel light (or a plurality of panel lights) according to the present invention and a plurality of functional components according to the present invention as described herein above. The panel light can be selectively assembled with any one of the plurality of functional components by their respective functional section at least partially be(ing) inserted in(to) the through hole or opening(s) from the rear side towards the front side, respectively. Hence, for the first time a panel light is provided which allows for a selective attachment of any kind and type of functional components/elements, like the ones described herein above, via a kind of standardized interface in the form of a receiving portion by the through hole.

The element housings of the functional sections of the different functional components may each have the same layout and dimension, so that - irrespective of the functional component used - a well and uniform appearance of the luminaire is given while allowing for an interchangeability with any kind of functional components. For the same reasons, also the functional housings of the different functional components each may have the same layout and dimension.

Further embodiments, features and advantages of the present invention are now described by the Figures of the enclosed drawings.
- Figure 1: shows a perspective rear view of a panel light according to a first embodiment of the present invention,
- Figure 2: shows a top rear view of the panel light according to Figure 1,
- Figure 3: shows an exploited perspective rear view of the panel light according to Figure 1,
- Figure 4: shows a schematic exploited perspective rear view of a panel light according to a second embodiment of the present invention,
- Figure 5: shows a schematic perspective rear view of a panel light according to a third embodiment of the present invention,
- Figure 6: shows a schematic perspective rear view of a panel light according to a fourth embodiment of the present invention,
- Figure 7: shows schematic perspective views of three different types of functional components for a panel light of the present invention,
- Figure 8: shows four examples of element housings of functional sections for different types of functional components; (a) blank cover, (b) PIR sensor, (c) MWS, (d) emergency light,
- Figure 9: shows three examples of carriers for connecting and carrying the functional element; (a) emergency light, (b) MWS, (c) PIR sensor,
- Figure 10: shows schematic top front views of four embodiments of the panel light based on the panel light according to Figure 5 each provided with a functional component; (a) to provide a blank cover, (b) to provide a PIR sensor, (c) to provide an MWS, (d) to provide an emergency light, and
- Figure 11: shows a top rear view of a part of a panel light according to a fifth embodiment of the present invention being similar to the ones shown in Figures 1 to 5 and 10.

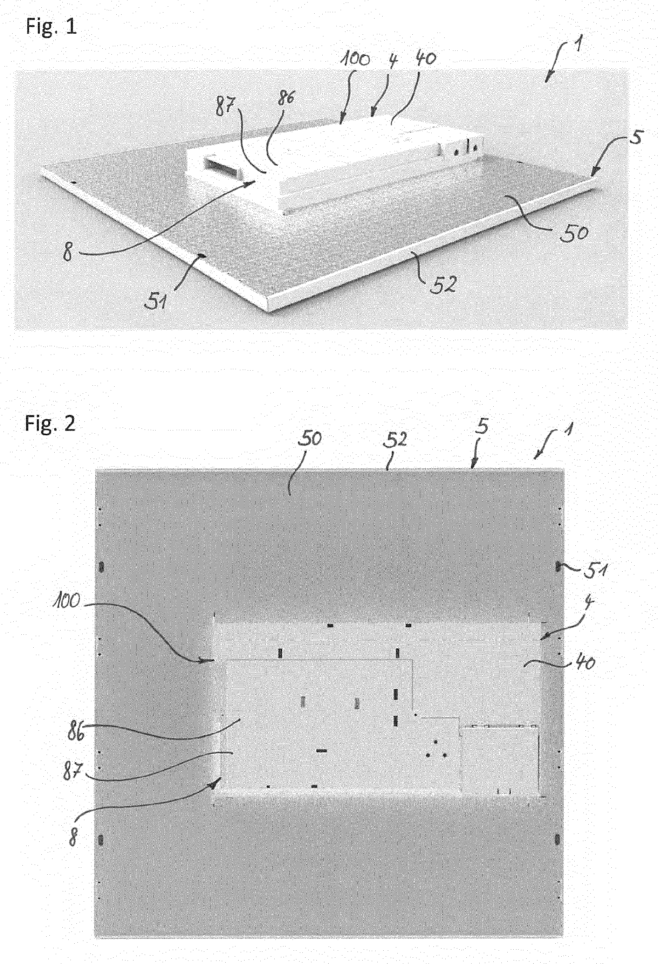

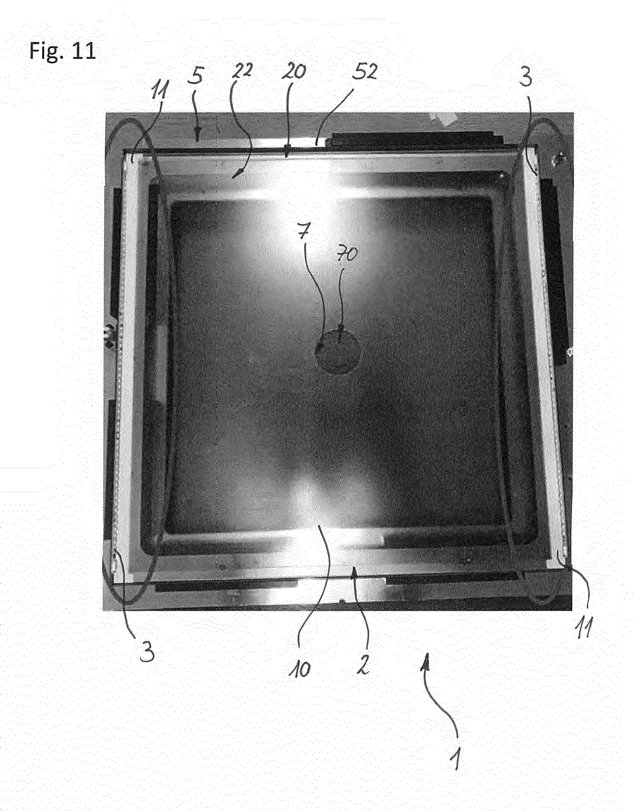

Figures 1 to 6 and 10 show different embodiments of a panel light 1 according to the present invention; Figure 11 shows a part of a panel light 1 according to the present invention being similar to the ones shown in Figures 1 to 5 and 10. As can be particularly seen in Figures 1 and 3 to 6, the panel light 1 is a flat luminaire. This means that the panel light's 1 dimensions in two directions (width and depth) being orthogonal to each other are many times higher than the panel light's 1 dimensions in a third direction (height = thickness) being orthogonal to the two other directions. The shown panel lights 1 thus have a kind of plate-like or panel-like appearance and substantially extend in a plane; i.e. being a panel light 1.

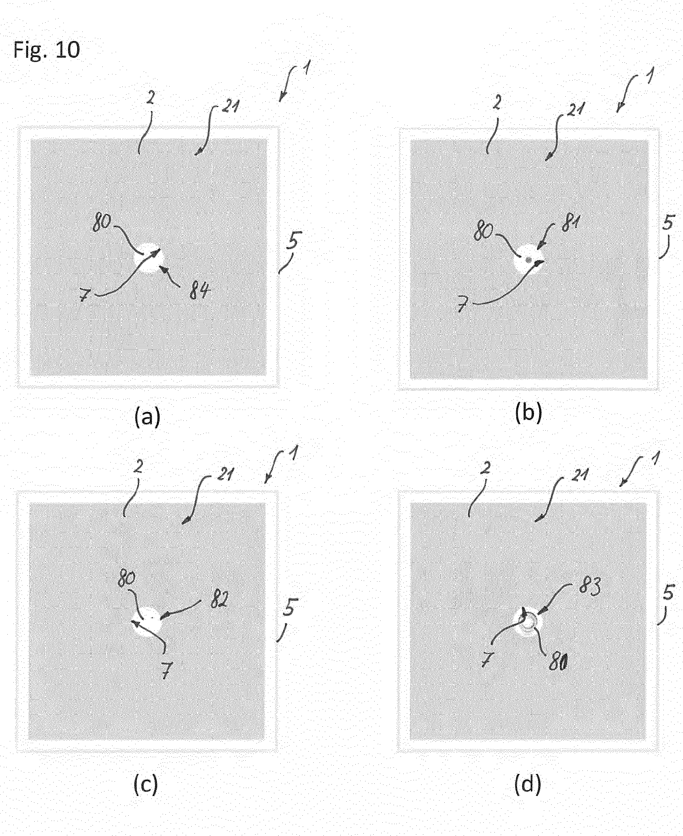

The panel light 1 comprises an optical element panel 2 as can be best seen in Figures 10 and 11. The optical element panel 2 here substantially extends in a plane and has a front side 21, a rear side 22 and a circumferential side edge 20 extending between the front side 21 and the rear side 22. The front side 21 and the rear side 22 preferably extend in two substantially parallel planes. The side edge 20 of the optical element panel 2 preferably extends between the front side 21 and the rear side 22 (at least partially) orthogonally to the front side 21 and/or the rear side 22. The side edge 20 may also comprise (circumferential) stepped or sloped regions separating the side edge into a plurality of side edge sections.

The optical element panel 2 may comprise a single element or a plurality of different elements, e.g., of the group consisting of a light guide panel, a luminaire cover (10; see Figure 11), a diffuser (panel), and a lens (arrangement). The optical element panel 2 may further comprise a reflector (panel) and/or other elements. For instance, the optical element panel 2 may have a layered structure of different elements being stacked together to form the optical element panel 2. The different elements may have different dimensions, e.g. in width and/or depth, which may result in the side edge 20 comprising the (circumferential) stepped or sloped regions separating the side edge 20 at least partially into a plurality of side edge sections.

According to an exemplary embodiment, the optical element panel 2 may comprise a flat light guide panel at the front surface of which can be provided a lens arrangement, and at the front side of the lens arrangement can be provided a luminaire cover (10; see Figure 11) or a diffuser for optimizing the light output in a desired manner. At a rear side of the light guide, a reflector (panel) may be provided to increase the light output efficiency of the panel light 1. In a most preferred embodiment, the light output of the panel light 1 thus happens via the front side 21 of the optical element panel 2. Preferably, a homogenous light output is obtained - here via the front side of the luminaire 1 - for homogenous illumination and a well appearance of the panel light 1. A secondary illumination, e.g. for ambient lighting, can also be obtained, e.g. via the rear side of the luminaire 1. Light output can be obtained via any desired side of the luminaire 1, as desired.

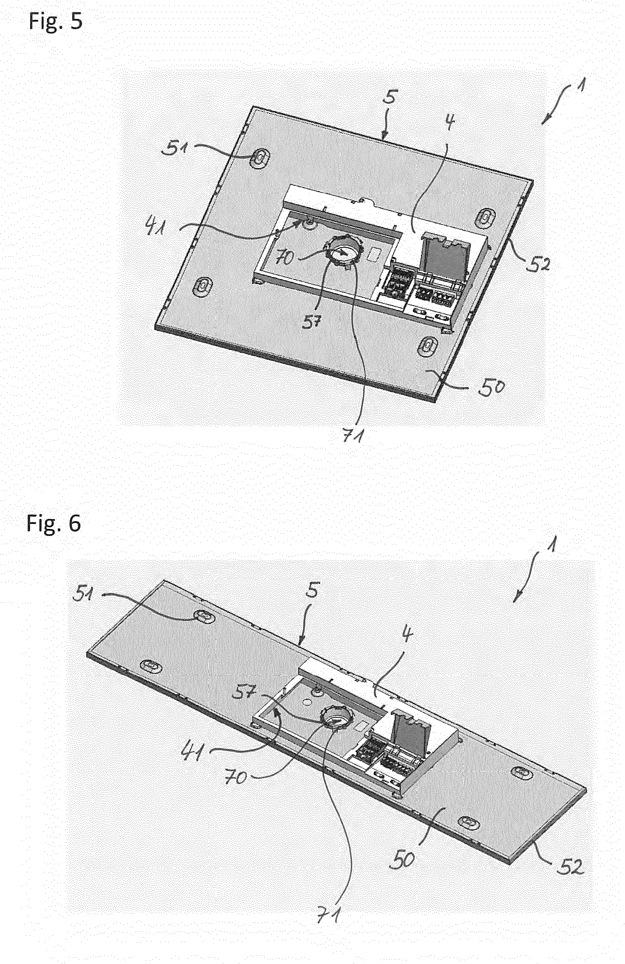

The panel light 1 and/or the optical element panel 2 may have any shape (in top view). Here, the panel light 1 and the optical element panel 2 have a square shape (see Figures 1 to 5, 10 and 11) or a rectangular shape (see Figures 1 to 6, 10 and 11). The square panel light 1 preferably is 600mm x 600mm (width x depth) in size and the rectangular panel light 1 of Figure 6 is preferably 300mm x 1200mm (width x depth) in size. For instance, the panel light 1 and/or the optical element panel 2 can also be polygonal, round, circular or oval in shape, or may have any other shape as desired.

The panel light 1 further comprises a light source 3 to emit light via the optical element panel 2 for light output of the panel light 1. As already mentioned, the light output preferably happens (at least) via the front side 21 of the optical element panel 2. However, also light output via any other side of the optical element panel 2 or luminaire 1, like the rear side 22 for secondary illumination or even via the circumferential side edge 20 can be possible.

The light source 3 may comprise an LED module as exemplarily shown in Figure 11. LED modules are preferred to provide a light source 3 having small dimensions while allowing for a high light output. The LED module can comprise any type, number and combination of LEDs or OLEDs, as desired. Preferably, the LEDs are arranged in a row to provide a longitudinal LED module 3 (see Figure 11). In a preferred embodiment, the LED module 3 is positioned to emit light into the side edge 20 of the optical element panel 2, preferably a side edge of the light guide panel extending between the front side 21 and the rear side 22. Such an edge-lit luminaire 1 allows for the panel light 1 having a very small thickness while allowing a large surface for a preferably homogenous light output, e.g. via the front side 21. The light can be coupled out of the light guide panel by any known outcoupling means, like a rear side reflector, a front side lens (arrangement) and/or micro damages like defined roughening of the light guide panel surface. Also a defined reflective coating on the light guide panel is possible.

The panel light 1 further comprises an electronic module 4 to run the light source 3. The electronic module 4 may comprise electronic components like a driver and/or other means, like terminals 60 for connection of (external) electrical cables. As can be seen in Figures 1 to 6, the electronic module 4 may comprise a cable connection section 6 for connecting electrical cables to provide electricity or data signals for operating the panel light 1. The cable connection section 6 therefore comprises one or a plurality of the mentioned terminals 60 for receiving and connecting corresponding cables. The cable connection section 6 preferably further comprises a cover section 61 for selectively opening and closing the cable connection section 6, e.g., to cover the terminals 60.

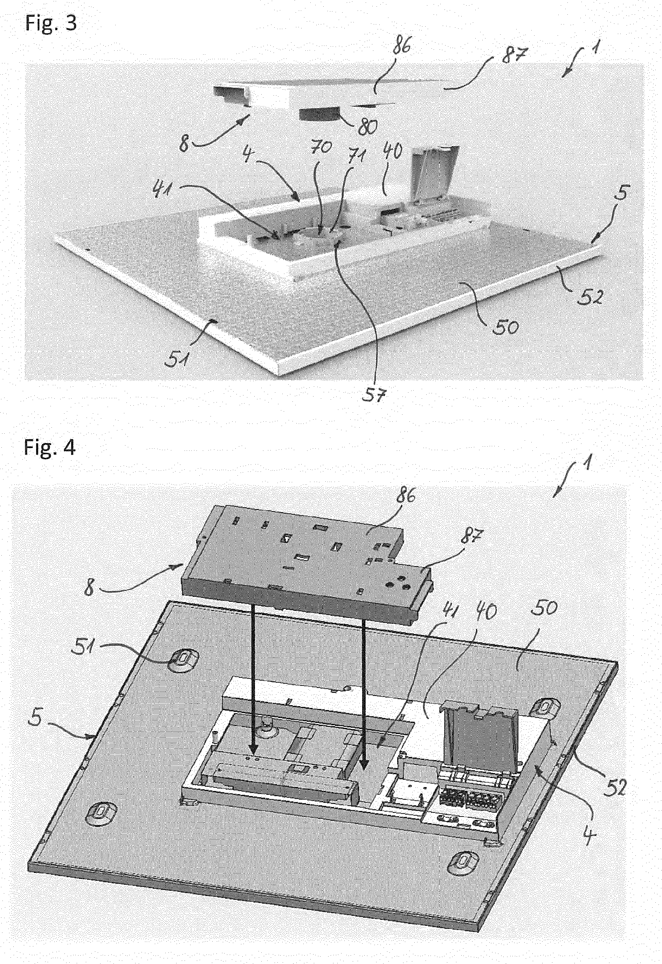

As best shown in Figures 1 to 6, 10 and 11, the panel light 1 further comprises a luminaire housing 5 for carrying the optical element panel 2 and preferably further the light source 3 and or the electronic module 4. As shown in the embodiments of the Figures 1 to 6, the luminaire housing 5 comprises a base portion 50 covering the rear side 22 of the optical element panel 2. As can be seen in particular in Figures 4 to 6, the base portion 50 may comprise mounting sections 51 for mounting the panel light 1 to a mounting surface, like a wall or a ceiling. The mounting sections 51 may also be used for receiving a hanger assembly for a pendant luminaire. As seen in the embodiments, the base portion 50 covers all of the rear side 22 of the optical element panel 2 to best support the optical element panel 2.

The luminaire housing 5 may further comprise a frame portion 52 here circumferentially surrounding the optical element panel 2 at its side edge 20. For instance, the panel light 1 may be build up by providing the frame portion 52 in which, for instance, the light sources 3 are provided at an inner side of said frame portion 52 to emit light preferably laterally to the centre of the frame portion 52. The optical element panel 2 is then positioned (e.g. as a stack of a plurality of elements as described herein above) in the frame portion 52 preferably such that light of the light source 3 emits light towards an edge (i.e. a light input area) of the optical element panel 2, like a light guide, to thus allow the light distributing over the entire surface of the optical element panel 2 (e.g. the light guide panel) for light output preferably via the (entire) front side 21. In Figure 11 there is shown an assembly state in which two light sources 3 are placed here at the opposite left and right sides of the frame portion 52 to emit light towards an interior region and preferably a central region of the luminaire 1 or frame portion 52 where the optical element panel 2 and preferably at least its light guide panel 2 is to be placed. In the shown embodiment, the luminaire cover 10 is already placed in the frame portion 52 and here, as shown in Figure 11, aligned/centred by spacers 11 being positioned at opposite sides of the luminaire cover 10; preferably at the opposite sides at which the light sources 3 are positioned. Preferably, the spacers 11 allow alignmend/centering also of the light guide panel 2 when being stacked with the luminaire cover 10 and/or other elements of the optical element panel 2. The spacers 11 thus allow alignment/centering of the optical element panel 2 as a whole or, if comprising a plurality of elements, of particular or all elements thereof (e.g. the light guide panel) preferably with respect to the luminaire housing 5 or at least its frame portion 52. Further, the spacers 11 may also allow for alignment of the light source 3 with respect to the optical element panel 2 and, by receiving the optical element panel 2 between the shown two spacers 11, preferably further keep the light source 3 in contact with the frame portion 52 for efficient heat dissipation. Once the optical element panel 2 is placed and preferably aligned/centred in the frame portion 52, the base portion 50 can be provided to cover the rear side 22 of the optical element panel 2 and thus securely housing the optical element panel 2 and the light source 3. The electronic module 4 can then be positioned or attached at the rear side 22 of the optical element panel 2, if no base portion 50 is present, or at the rear side 53 of the base portion 50 being opposite to the optical element panel 2 and thus at a rear side of the panel light 1. The electronic module 4 can thus preferably be positioned at a hidden section of the panel light 1 opposite to the light output area, namely the front side 21.

As best seen in Figures 3, 5, 6 and 11, an opening 7 is provided which penetrates the optical element panel 2 to connect the front side 21 and the rear side 22 to form a through hole 70 designed to receive at least part of a functional component 8, as will also be described with respect to different embodiments in more detail herein below.

In the shown embodiments of Figures 1 to 6 having a base portion 50 covering the rear side 22 of the optical element panel 2, the base portion 50 further comprises a second opening 57 being coaxially arranged with the opening 7 of the optical element panel 2 to form the through hole 70.

In the shown embodiments as best seen in Figures 1 to 6, an optional insert 71 is provided in the through hole 70 to cover the circumferential surface of the through hole 70 or opening(s) 7, 57. The insert 71 may provide a guidance for a functional section 80 of the functional component 8 as described herein below. The guidance, however, can also be simply provided by the opening(s) 7, 57 or through hole 70 itself. The insert 71 may block any light which propagates through the optical element panel 2, preferably the light guide panel, to avoid light leakage via the through hole 70 or the opening(s) 7, 57. In a preferred embodiment, the inlet may comprise dedicated light exiting means (e.g. openings) to allow a defined light output via the inlet to a corresponding functional component 8 be (partially) inserted in the through hole 70, i.e. in the insert 71.

If the electronic module 4 is positioned at the rear side 22 of the optical element panel 2 or, as shown, at the rear side 53 of the base portion 50, the opening(s) 7, 57 or the through hole 70 connect the front side 21 with the electronic module 4. In the shown embodiments, the through hole 70 or the opening(s) 7, 57 are, in a rear top view, at least partially surrounded by the electronic module 4.

The light source 3, preferably in the form of an LED module, is here provided at least at one or preferably at two opposite sides of the optical element panel 2 (e.g. the light guide panel thereof) or its side edge which forms a light input area. If the light source 3 is only provided at one side of the optical element panel 2, there are preferably provided reflective means at a side of the optical element panel 2 (e.g. at the side edge of the light guide panel or in the light guide panel or at the frame portion 52) opposite to the light input area with respect to the opening 7 or through hole 70 to reflect light input via the light input area towards a side of the opening 7 or through hole 70 opposite to the light input area to thus allow for a homogenous light distribution over the entire optical element panel 2, i.e. light guide panel, even at theoretically unlit areas "behind" the opening 7 or through hole 70 with respect to the light input area.

Now, with particular reference to Figures 1 to 4, the panel light 1 may further comprise a functional component 8, as already mentioned herein above. The functional component 8 is detachably mounted; here to the rear side 53 of the base portion 50. It may also be detachably mounted to any other part of the panel light 1, as desired. The functional component 8 at least comprises a functional section 80. In the mounted state, the functional section 80 is at least partially inserted in(to) the through hole 70 or the opening(s) 7, 57 (and, if present, the insert 71) from the rear side 22 towards the front side 21. In other words, the functional section 80 can be inserted and positioned in the opening(s) 7,57 or the through hole 70 from and via the rear side of the panel light 1 to thus be functionally disposed towards or at the front side 21 of the optical element panel 2 or the panel light 1 at all. In a most preferred embodiment, the functional section 80 is inserted in the through hole 70 or the opening(s) 7, 57 in a way to be substantially flush with the front side 21 of the optical element panel 2. The insert 71 may be provided to allow for a most accurate guidance and positioning of the functional section 80 and preferably also for protecting the optical element 2 from damage or wear.

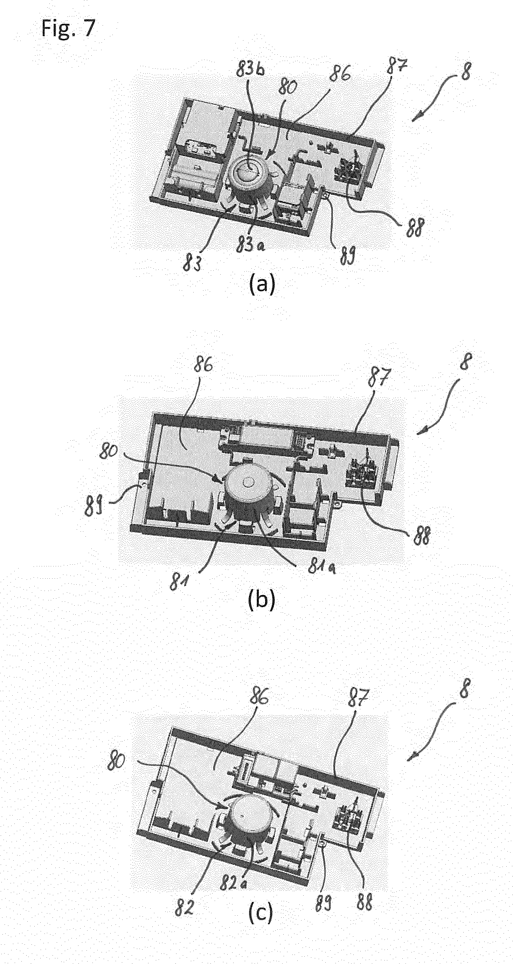

The functional section 80 may comprise one or a plurality of functional elements 81-84. The functional elements 81-84 may be functional elements 81-84 of the group consisting of a sensor, like a passive infrared sensor (PIR sensor) 81 (see Figures 7b and 10b) and/or a microwave sensor (MWS) 82 (see Figures 7c and 10c), a lighting unit 83 (see Figures 7a and 10d), like an emergency light (e.g. including an emergency functioning LED module with built in indicator LEDs) and/or a status indicator lamp, a wireless communication module, like a Bluetooth module and/or a WLAN module and/or an RFID module, and a blank cover 84 (see Figure 10a).

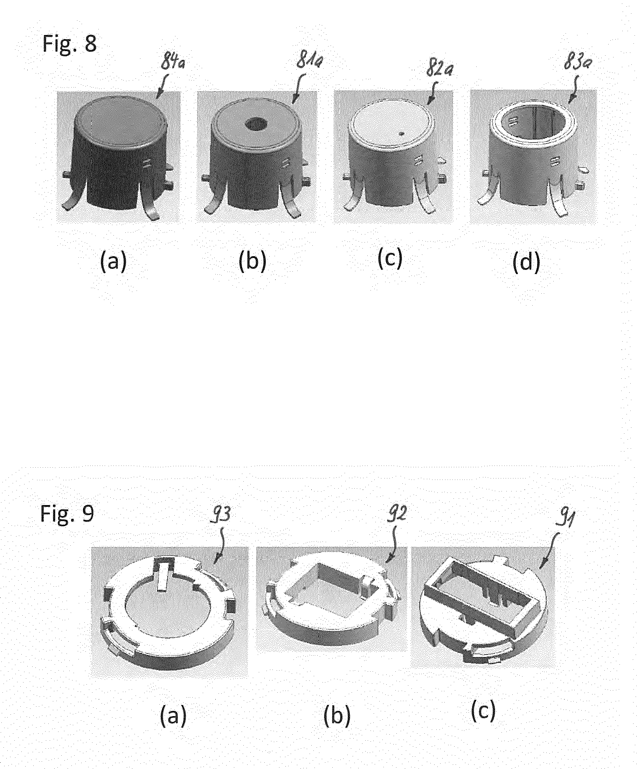

The functional section 80 may comprise an element housing (81a for PIR sensor; 82a for MWS, 83a for lighting unit, 84a for blank cover) for carrying the corresponding functional element 81-84. The element housings 81a-84a of different functional sections 80 preferably each have the same layout and dimension, as can be seen in Figure 8. The element housings 81a-84a are preferably made by injection moulding.

The functional section 80 may preferably comprise a lens 83b to allow for a desired output of the functional element 81-84. This is most preferred for a desired output, e.g., of the infrared light of the PIR sensor 81 or the light of the lighting unit 83, preferably the emergency light or status indicator lamp, as exemplarily shown in Figure 7a. In a preferred embodiment, the lens 83b can be interchangeably provided for optical distribution changes. Therefore, the lens 83b can, for instance, be detachably connected to the element housing 83a.

With reference to Figures 1 to 4 and 7, the functional component 8 may further comprise a base section 86 for detachably mounting the functional component 8 preferably to the rear side 22 of the optical element panel 2 or the luminaire housing 5, preferably its base portion 50, or the electronic module 4 as exemplarily shown in the embodiments of Figures 1 to 4. The base section 86 itself may preferably comprise at least parts of the electronic components to run the functional section 80.

The functional component 8, preferably at least its base section 86, may comprise a functional housing 87 which can also be made by injection moulding. The functional housing 87 preferably cooperates with a module housing 40 of the electronic module 4 to form an associated electronic housing 100 when the functional component 8 is mounted, as can be seen, for instance, in Figures 1 and 2. The module housing 40 can also be made by injection moulding and may house and/or carry the electronic components (e.g. the driver) and the other means of the electronic module 4.

In a preferred embodiment, the base section 86 can be fixed by the base section 86, preferably its functional housing 87, being slid under details that are provided at the rear side of the luminaire 1, e.g. in the luminaire housing 5, preferably its base portion 50 or its metal work, or in the electronic module 4, preferably its module housing 40. The so attached base section 86 can then be fixed into position, e.g., by using only one or a desired number of fixing means, like screws.

The base section 86 and the functional section 80 can be detachably connected to each other, preferably via the element housing 81a-84a as exemplarily shown in Figure 7 for three different types of functional sections 80 having different types of functional elements 81-84, namely a lighting unit 83 in Figure 7a, a PIR sensor 81 in Figure 7b, and a MWS 82 in Figure 7c.

In a preferred embodiment, the functional element 81-84 or even the entire functional section 80 (e.g. including the element housing 81a-84a) can be preferably detachably connected to the base section 86. Therefore, the functional element 81-84, preferably along with the element housing 81a-84a carrying the functional element 81-84, can, for instance, be purely fit in a vertical motion. If required, it can then be retained by fixing means, like screws, when inserted. Additionally or alternatively, the functional element 81-84 or even the entire functional section 80 (e.g. including the element housing 81a-84a) can also be preferably detachably connected to the base section 86 by a carrier 91-93. In Figure 9 there are shown examples of such carriers 91-93, namely a carrier 93 for a lighting unit 83 in Figure 9a, a carrier 92 for a microwave sensor (MWS) 82 as shown in Figure 9b, and a carrier 91 for a PIR sensor 81 as shown in Figure 9c. Like the element housings 81a-84a, also the carriers 91-93 can be made by injection moulding. In a preferred embodiment, insertion of the functional element 81-84 makes an electrical contact between the two parts 80, 86.

The functional component 8, preferably its function section 80 and/or its base section 86, on the one side, and the electronic module 4 on the other side can comprise corresponding electrical connectors 88 and/or mechanical connectors 89. These connectors 88, 89 can be provided such that they got into functional connection by simply attaching the functional component 8 to the corresponding area in a detachable manner, preferably to the electronic module 4. For sufficient secure attachment, the mechanical connectors 89 may comprise snap fit connectors and/or other structural connectors and/or additional fixing means, like screws. The electrical connectors 88 can be simple cable connections or may also be provided by a plug-and-socket connection.

The functional component 8, preferably its functional section 80 and/or its base section 86 on the one side, and the electronic module 4 on the other side, preferably their connectors 88, 89, may comprise poka-yoke structures for fail-safe assembly. In the shown embodiments, for instance, the functional housing 87 may have an asymmetric layout, which only fits in a unique mounting orientation in a corresponding receiving section 41 of the module housing 40.

As mentioned, the electronic module 4 may comprise at least one driver (preferably housed in and/or carried by the module housing 40) to operate the light source 3. The electronic module 4 may also comprise a rechargeable battery or battery pack for self-sustained operation of at least some of the (electronic) components of the electronic module 4. For instance, the rechargeable battery or battery pack can be connected to the driver to enable emergency lighting in case that the main supply fails. The driver may be a maintained or non-maintained emergency driver which may also control the status indicator lamp and preferably use it to output status information, e.g., about conditions of the battery (pack) and/or the driver.

The present invention is also directed to a kit comprising a (plurality of) panel light(s) 1 according to the present invention being exemplarily shown in Figures 5 and 6 in two different embodiments. The kit further comprises a plurality of functional components 8, as exemplarily shown in Figure 7. The panel light 1 can then be selectively assembled with any one of the plurality of functional components 8 by their respective functional section 80 at least partially be(ing) inserted in(to) the through hole 70 or opening(s) 7,57 from the rear side 22 towards the front side 21, respectively. Hence, the panel light 1 can be easily equipped with different functions by simply attaching a desired functional component 8. It is thus possible to provide a panel light 1 simply with an aesthetical functional component, for instance by simply providing a blank cover 85 as shown in Figure 10a. Also, more sophisticated functions of the panel light 1 can be obtained by using more sophisticated functional components 8, like including a PIR sensor 81 (Figure 10b), a microwave sensor (MWS) 82 (as shown in Figure 10c), or a lighting unit 83 (as shown in Figure 10d). Many other functional components 8 with one or a plurality of functional elements are possible to be provided in the same manner so that the panel light 1 or even a selection of panel lights 1 (e.g. as shown in Figures 5 and 6 in different dimensions) can be easily provided with any function desired by the customer and thus incredibly increasing the flexibility of the panel light 1 according to the present invention. If no such function is required or at least for shipping, the panel light 1 can also be used without any functional component 8 while providing the opportunity to apply any such functional component 8 at any time during the life cycle of the panel light 1 or also exchange the functional component 8 at any time due to the functional component 8 being easily detachably mounted as part of the panel light 1.

As shown, for instance, in Figures 7 and 8, the element housings 81a-84a of the functional sections 80 of the different functional components 8 each may have the same layout and dimension, so that the visual appearance of the panel light 1 with different functional components 8 does not or not severely change when exchanging the functional sections 81-84. Further, interchangeability of any desired functional component is thus facilitated. For the same reasons, also the functional housings 87 of the different functional components 8 each may have the same layout and dimension.

The present invention is not limited to the embodiments described herein above as long as being covered by the appended claims. The features of the embodiments can be replaced and combined in any desired manner.

## Claims

1. Panel light (1), comprising:
an optical element panel (2) substantially extending in a plane and having a front side (21), a rear side (22) and a circumferential side edge (20) extending between the front side (21) and the rear side (22),
a light source (3) to emit light via the optical element panel (2) for light output of the panel light (1),
an electronic module (4) to run the light source (3), and
a luminaire housing (5) for carrying the optical element panel (2),
wherein an opening (7) penetrates the optical element panel (2) to connect the front side (21) and the rear side (22)
wherein the luminaire housing (5) comprises a base portion (50) covering the rear side (22) of the optical element panel (2),
wherein the base portion (50) is in flat contact with the rear side of the optical element panel (2) and extends over the whole rear side to thus completely cover and support the optical element panel (2) at its rear side, and
wherein the base portion (50) comprises a second opening (57) being coaxially arranged with the opening (7) of the optical element panel (2) to form a through hole (70) designed to receive at least part of a functional component (8).

2. Panel light (1) according to claim 1, further comprising the luminaire housing (5) for carrying further the light source (3) and/or the electronic module (4), and/or
wherein the luminaire housing (5) comprises a frame portion (52) circumferentially surrounding the optical element panel (2) at its side edge (20).

3. Panel light (1) according to any one of the preceding claims, wherein the electronic module (4) is positioned at the rear side (22) of the optical element panel (2) or at a rear side (53) of the base portion (50) being opposite to the optical element panel (2), to connect the front side (21) with the electronic module (4) via the through hole (70).

4. Panel light (1) according to any one of the preceding claims, wherein the optical element panel (2) comprises a light guide panel and/or a luminaire cover and/or a diffusor panel and/or a lens arrangement, and preferably further a reflector, wherein the light output of the panel light (1) preferably happens at least via the front side (21) of the optical element panel (2).

5. Panel light (1) according to any one of the preceding claims, wherein the light source (3) comprises an LED module, wherein the LED module preferably emits light into the side edge (20) of the optical element panel (2), preferably a side edge of the light guide panel extending between the front side (21) and the rear side (22).

6. Panel light (1) according to any one of the preceding claims, further comprising a functional component (8) being detachably mounted, the functional component (8) comprising a functional section (80) at least partially being inserted in the through hole (70) from the rear side (22) towards the front side (21), preferably in a way to be substantially flush with the front side (21).

7. Panel light (1) according to claim 6, wherein the functional section (80) comprises one or a plurality of functional elements (81-84) of the group consisting of: a sensor, like a passive infrared sensor (PIR sensor) (81) and/or an microwave sensor (MWS) (82), a lighting unit (83), like an emergency light and/or a status indicator lamp, a wireless communication module, like a Bluetooth module and/or a WLAN module and/or an RFID module, and a blank cover (84).

8. Panel light (1) according to claim 6 or 7, wherein the functional section (80) comprises an element housing (81a-84a) for carrying the functional element, wherein preferably the element housings (81a-84a) of different functional sections (80) each have the same layout and dimension.

9. Panel light (1) according to any one of claims 6 to 8, wherein the functional component (8) further comprises a base section (86) for detachably mounting the functional component (8) preferably to the rear side (22) or the luminaire housing (5), preferably its base portion (50), or the electronic module (4), wherein the base section preferably comprises electronic components to run the functional section (80).

10. Panel light (1) according to claim 9, wherein the base section (86) and the functional section (80) are detachably connected to each other, preferably via the element housing (81a-84a), wherein preferably the functional element (81-84) is preferably detachably connected to the base section (86) by a carrier (91-94).

11. Panel light (1) according to any one of claims 6 to 10, wherein the functional component (8), preferably at least its base section (86), comprises a functional housing (87), wherein the functional housing (87) preferably cooperates with a module housing (40) of the electronic module (4) to form an associated electronic housing (100) when the functional component (8) is mounted.

12. Panel light (1) according to any one of claims 6 to 11, wherein the functional component (8), preferably its functional section (80) and/or its base section (86), on the one side and the electronic module (4) on the other side comprise corresponding electrical and/or mechanical connectors.

13. Panel light (1) according to any one of claims 6 to 12, wherein the functional component (8), preferably its functional section (80) and/or its base section (86), on the one side and the electronic module (4) on the other side, preferably their connectors, comprise poka-yoke structures for fail-safe assembly.

14. Kit comprising a panel light (1) according to any one of claims 1 to 5 and a plurality of functional components (8) according to any one of claims 6 to 13, wherein the panel light (1) can be selectively assembled with any one of the plurality of functional components (8) by their functional section (80) at least partially being inserted in the through hole (70) from the rear side (22) towards the front side (21), respectively.

15. Kit according to claim 14 at least in combination with claim 8, wherein the element housings (81a-84a) of the functional sections (80) of the different functional components (8) each have the same layout and dimension, and/or the functional housings (87) of the different functional components (8) each have the same layout and dimension.

## Patentansprüche

1. Flächenleuchte (1), umfassend:
eine optische Elementplatte (2), die sich im Wesentlichen in einer Ebene erstreckt und eine Vorderseite (21), eine Rückseite (22) und eine umlaufende Seitenkante (20) aufweist, die sich zwischen der Vorderseite (21) und der Rückseite (22) erstreckt,
eine Lichtquelle (3) zum Emittieren von Licht über die optische Elementplatte (2) zum Ausgeben von Licht aus der Flächenleuchte (1),
ein Elektronikmodul (4) zum Betreiben der Lichtquelle (3), und
ein Leuchtengehäuse (5) zum Tragen der optischen Elementplatte (2),
wobei eine Öffnung (7) die optische Elementplatte (2) durchdringt, um die Vorderseite (21) und die Rückseite (22) zu verbinden
wobei das Leuchtengehäuse (5) einen Basisabschnitt (50) umfasst, der die Rückseite (22) der optischen Elementplatte (2) abdeckt,
wobei der Basisabschnitt (50) in flächigem Kontakt mit der Rückseite der optischen Elementplatte (2) steht und sich über die gesamte Rückseite erstreckt, um somit die optische Elementplatte (2) an ihrer Rückseite vollständig abzudecken und zu stützen, und
wobei der Basisabschnitt (50) eine zweite Öffnung (57) umfasst, die koaxial mit der Öffnung (7) der optischen Elementplatte (2) angeordnet ist, um ein Durchgangsloch (70) zu bilden, das zum Aufnehmen zumindest eines Teils einer Funktionskomponente (8) ausgebildet ist.

2. Flächenleuchte (1) nach Anspruch 1, ferner umfassend das Leuchtengehäuse (5) zum weiteren Aufnehmen der Lichtquelle (3) und/oder des Elektronikmoduls (4), und/oder wobei das Leuchtengehäuse (5) einen Rahmenabschnitt (52) umfasst, der die optische Elementplatte (2) an ihrer Seitenkante (20) umgibt.

3. Flächenleuchte (1) nach einem der vorhergehenden Ansprüche, wobei das Elektronikmodul (4) an der Rückseite (22) der optischen Elementplatte oder an einer der optischen Elementplatte (2) gegenüberliegenden Rückseite (53) des Basisabschnitts (50) angeordnet ist, um die Vorderseite (21) über das Durchgangsloch (70) mit dem Elektronikmodul (4) zu verbinden.

4. Flächenleuchte (1) nach einem der vorhergehenden Ansprüche, wobei die optische Elementplatte (2) eine Lichtleiterplatte und/oder eine Leuchtenabdeckung und/oder eine Diffusorplatte und/oder eine Linsenanordnung, und vorzugsweise ferner einen Reflektor umfasst, wobei der Lichtaustritt der Flächenleuchte (1) vorzugsweise zumindest über die Vorderseite (21) der optischen Elementplatte (2) erfolgt.

5. Flächenleuchte (1) nach einem der vorhergehenden Ansprüche, wobei die Lichtquelle (3) ein LED-Modul umfasst, wobei das LED-Modul vorzugsweise Licht in die Seitenkante (20) der optischen Elementplatte (2), vorzugsweise eine sich zwischen der Vorderseite (21) und der Rückseite (22) erstreckende Seitenkante der Lichtleiterplatte, emittiert.

6. Flächenleuchte (1) nach einem der vorhergehenden Ansprüche, ferner umfassend eine Funktionskomponente (8), die lösbar befestigt ist, wobei die Funktionskomponente (8) einen Funktionsabschnitt (80) umfasst, der zumindest teilweise von der Rückseite (22) zur Vorderseite (21) hin, vorzugsweise im Wesentlichen bündig mit der Vorderseite (21), in das Durchgangsloch (70) eingesetzt ist.

7. Flächenleuchte (1) nach Anspruch 6, wobei der Funktionsabschnitt (80) ein oder eine Vielzahl von Funktionselementen (81-84) aus der Gruppe bestehend aus:
einem Sensor, wie einem Passiv-Infrarot-Sensor (PIR-Sensor) (81) und/oder einem Mikrowellensensor (MWS) (82),
einer Beleuchtungseinheit (83), wie einem Notlicht und/oder einer Statusanzeigelampe, einem drahtlosen Kommunikationsmodul, wie einem Bluetooth-Modul und/oder einem WLAN-Modul und/oder einem RFID-Modul, und einer Blindabdeckung (84) umfasst.

8. Flächenleuchte (1) nach Anspruch 6 oder 7, wobei der Funktionsabschnitt (80) ein Elementgehäuse (81a-84a) zum Tragen des Funktionselements umfasst, wobei vorzugsweise die Elementgehäuse (81a-84a) unterschiedlicher Funktionsabschnitte (80) jeweils die gleiche Anordnung und Abmessung aufweisen.

9. Flächenleuchte (1) nach einem der Ansprüche 6 bis 8, wobei
die Funktionskomponente (8) ferner einen Basisabschnitt (86) zur lösbaren Befestigung der Funktionskomponente (8) vorzugsweise an der Rückseite (22) oder dem Leuchtengehäuse (5), vorzugsweise dessen Basisabschnitt (50), oder dem Elektronikmodul (4) umfasst,
wobei der Basisabschnitt vorzugsweise elektronische Komponenten zum Betreiben des Funktionsabschnitts (80) umfasst.

10. Flächenleuchte (1) nach Anspruch 9, wobei der Basisabschnitt (86) und der Funktionsabschnitt (80) lösbar miteinander verbunden sind, vorzugsweise über das Elementgehäuse (81a-84a), wobei vorzugsweise das Funktionselement (81-84) über einen Träger (91-94) lösbar mit dem Basisabschnitt (86) verbunden ist.

11. Flächenleuchte (1) nach einem der Ansprüche 6 bis 10, wobei die Funktionskomponente (8), vorzugsweise zumindest deren Basisabschnitt (86), ein Funktionsgehäuse (87) umfasst, wobei das Funktionsgehäuse (87) vorzugsweise mit einem Modulgehäuse (40) des Elektronikmoduls (4) zusammenwirkt, um ein assoziiertes Elektronikgehäuse (100) zu bilden, wenn die Funktionskomponente (8) montiert ist.

12. Flächenleuchte (1) nach einem der Ansprüche 6 bis 11, wobei die Funktionskomponente (8), vorzugsweise deren Funktionsabschnitt (80) und/oder deren Basisabschnitt (86), einerseits und das Elektronikmodul (4) andererseits entsprechende elektrische und/oder mechanische Steckverbinder umfassen.

13. Flächenleuchte (1) nach einem der Ansprüche 6 bis 12, wobei die Funktionskomponente (8), vorzugsweise deren Funktionsabschnitt (80) und/oder deren Basisabschnitt (86), einerseits und das Elektronikmodul (4) andererseits vorzugsweise deren Steckverbinder, Poka-Yoke-Strukturen zur ausfallsicheren Anordnung umfassen.

14. Bausatz umfassend eine Flächenleuchte (1) nach einem der Ansprüche 1 bis 5 und eine Vielzahl von Funktionskomponenten (8) nach einem der Ansprüche 6 bis 13, wobei die Flächenleuchte (1) wahlweise mit einer beliebigen der Vielzahl von Funktionskomponenten (8) zusammengebaut werden kann, indem deren Funktionsabschnitt (80) zumindest teilweise von der Rückseite (22) zur Vorderseite (21) hin in das Durchgangsloch (70) eingesetzt wird.

15. Bausatz nach Anspruch 14 zumindest in Kombination mit Anspruch 8, wobei die Elementgehäuse (81a-84a) der Funktionsabschnitte (80) der verschiedenen Funktionskomponenten (8) jeweils die gleiche Anordnung und Abmessung aufweisen, und/oder die Funktionsgehäuse (87) der verschiedenen Funktionskomponenten (8) jeweils die gleiche Anordnung und Abmessung aufweisen.

## Revendications

1. Panneau lumineux (1), comprenant :
un panneau d'élément optique (2) s'étendant sensiblement dans un plan et ayant un côté avant (21), un côté arrière (22) et un bord latéral circonférentiel (20) s'étendant entre le côté avant (21) et le côté arrière (22),
une source lumineuse (3) destinée à émettre de la lumière via le panneau d'élément optique (2) pour la sortie de lumière du panneau lumineux (1),
un module électronique (4) destiné à faire fonctionner la source lumineuse (3), et
un boîtier de luminaire (5) destiné à porter le panneau d'élément optique (2),
dans lequel une ouverture (7) pénètre le panneau d'élément optique (2) pour connecter le côté avant (21) et le côté arrière (22)
dans lequel le boîtier de luminaire (5) comprend une portion de base (50) recouvrant le côté arrière (22) du panneau d'élément optique (2),
dans lequel la portion de base (50) est en contact plat avec le côté arrière du panneau d'élément optique (2) et s'étend sur tout le côté arrière pour ainsi couvrir et supporter complètement le panneau d'élément optique (2) au niveau de son côté arrière, et
dans lequel la portion de base (50) comprend une deuxième ouverture (57) agencée coaxialement avec l'ouverture (7) du panneau d'élément optique (2) pour former un trou traversant (70) conçu pour recevoir au moins une partie d'un composant fonctionnel (8).

2. Panneau lumineux (1) selon la revendication 1, comprenant en outre le boîtier de luminaire (5) destiné en outre à porter la source lumineuse (3) et/ou le module électronique (4), et/ou
dans lequel le boîtier de luminaire (5) comprend une portion de cadre (52) entourant de manière circonférentielle le panneau d'élément optique (2) au niveau de son bord latéral (20).

3. Panneau lumineux (1) selon l'une quelconque des revendications précédentes, dans lequel le module électronique (4) est positionné au niveau du côté arrière (22) du panneau d'élément optique ou au niveau d'un côté arrière (53) de la portion de base (50) opposé au panneau d'élément optique (2), pour connecter le côté avant (21) au module électronique (4) via le trou traversant (70).

4. Panneau d'éclairage (1) selon l'une des revendications précédentes, dans lequel le panneau d'élément optique (2) comprend un panneau de guidage de lumière et/ou un cache de luminaire et/ou un panneau de diffuseur et/ou un agencement de lentille, et en outre de préférence un réflecteur, dans lequel la sortie de lumière du panneau lumineux (1) s'effectue de préférence au moins via la face avant (21) du panneau d'élément optique (2).

5. Panneau lumineux (1) selon l'une quelconque des revendications précédentes, dans lequel la source lumineuse (3) comprend un module LED, dans lequel le module LED émet de préférence de la lumière dans le bord latéral (20) du panneau d'élément optique (2), de préférence un bord latéral du panneau de guidage de lumière s'étendant entre le côté avant (21) et le côté arrière (22).

6. Panneau lumineux (1) selon l'une quelconque des revendications précédentes, comprenant en outre un composant fonctionnel (8) qui est monté de manière amovible, le composant fonctionnel (8) comprenant une section fonctionnelle (80) qui est au moins partiellement insérée dans le trou traversant (70) depuis le côté arrière (22) vers le côté avant (21), de préférence de manière à affleurer sensiblement le côté avant (21).

7. Panneau lumineux (1) selon la revendication 6, dans lequel la section fonctionnelle (80) comprend un ou une pluralité d'éléments fonctionnels (81-84) du groupe constitué de : un capteur, tel qu'un capteur infrarouge passif (capteur PIR) (81) et/ou un capteur à micro-onde (MWS) (82), une unité lumineuse (83), telle qu'une lumière de détresse et/ou un voyant indicateur d'état, un module de communication sans fil, tel qu'un module Bluetooth et/ou un module WLAN et/ou un module RFID, et un cache (84).

8. Panneau lumineux (1) selon la revendication 6 ou 7, dans lequel la section fonctionnelle (80) comprend un boîtier d'élément (81a-84a) destiné à porter l'élément fonctionnel, dans lequel de préférence les boîtiers d'élément (81a-84a) de différentes sections fonctionnelles (80) ont chacun la même disposition et les mêmes dimensions.

9. Panneau lumineux (1) selon l'une quelconque des revendications 6 à 8, dans lequel le composant fonctionnel (8) comprend en outre une section de base (86) destinée à monter de manière amovible le composant fonctionnel (8) de préférence sur le côté arrière (22) ou le boîtier de luminaire (5), de préférence sa portion de base (50), ou le module électronique (4),
dans lequel la section de base comprend de préférence des composants électroniques pour exécuter la section fonctionnelle (80).

10. Panneau lumineux (1) selon la revendication 9, dans lequel la portion de base (86) et la section fonctionnelle (80) sont connectées l'une à l'autre de manière amovible, de préférence via le boîtier d'élément (81a-84a), dans lequel l'élément fonctionnel (81-84) est de préférence connecté de manière amovible à la portion de base (86) par un support (91-94).

11. Panneau lumineux (1) selon l'une quelconque des revendications 6 à 10, dans lequel le composant fonctionnel (8), de préférence au moins sa section de base (86), comprend un boîtier fonctionnel (87), dans lequel le boîtier fonctionnel (87) coopère de préférence avec un boîtier de module (40) du module électronique (4) pour former un boîtier électronique associé (100) lorsque le composant fonctionnel (8) est monté.

12. Panneau lumineux (1) selon l'une des revendications 6 à 11, dans lequel le composant fonctionnel (8), de préférence sa section fonctionnelle (80) et/ou sa section de base (86), d'un côté et le module électronique (4) de l'autre côté comprennent des connecteurs électriques et/ou mécaniques correspondants.

13. Panneau lumineux (1) selon l'une quelconque des revendications 6 à 12, dans lequel le composant fonctionnel (8), de préférence sa section fonctionnelle (80) et/ou sa section de base (86), d'un côté et le module électronique (4) de l'autre côté, de préférence leurs connecteurs, comprennent des structures de détrompeur pour un assemblage à sécurité intégrée.

14. Kit comprenant un panneau lumineux (1) selon l'une quelconque des revendications 1 à 5 et une pluralité de composants fonctionnels (8) selon l'une quelconque des revendications 6 à 13, dans lequel le panneau lumineux (1) peut être assemblé de manière sélective avec l'un quelconque de la pluralité de composants fonctionnels (8) par leur section fonctionnelle (80) étant au moins partiellement insérée dans le trou traversant (70) depuis le côté arrière (22) vers le côté avant (21), respectivement.

15. Kit selon la revendication 14, au moins en combinaison avec la revendication 8, dans lequel les boîtiers d'éléments (81a-84a) des sections fonctionnelles (80) des différents composants fonctionnels (8) ont respectivement la même disposition et les mêmes dimensions, et/ou les boîtiers fonctionnels (87) des différents composants fonctionnels (8) ont respectivement la même disposition et les mêmes dimensions.
